Europäisches Patentamt

European Patent Office

Office européen des brevets

(19)

(11)　**EP 1 053 935 B1**

(12)　**EUROPEAN PATENT SPECIFICATION**

(45) Date of publication and mention
of the grant of the patent:
**27.04.2005　Bulletin 2005/17**

(51) Int Cl.[7]: **B64D 1/16**, A62C 3/02,
A62C 39/00, A62C 3/08

(21) Application number: **99906587.3**

(22) Date of filing: **01.02.1999**

(86) International application number:
**PCT/RU1999/000028**

(87) International publication number:
**WO 1999/039977 (12.08.1999 Gazette 1999/32)**

(54) **METHOD FOR EXTINGUISHING FIRES FROM AN AIRCRAFT AND RELATED DEVICE**

VERFAHREN UND VORRICHTUNG ZUM LÖSCHEN VON BRÄNDEN MIT HILFE VON
FLUGZEUGEN

PROCEDE D'EXTINCTION D'INCENDIES A L'AIDE D'UN AERONEF ET DISPOSITIF S'Y
RAPPORTANT

(84) Designated Contracting States:
**AT BE CH CY DE DK ES FI FR GB GR IE IT LI LU
MC NL PT SE**

(30) Priority: **06.02.1998　RU 98101933**

(43) Date of publication of application:
**22.11.2000　Bulletin 2000/47**

(73) Proprietor: **Nauchno-Issledovatelsky Inst.
Nizkikh Temperatur pri MAI(Mosk.
Gosudarstvennom Aviatsionnom
Inst.-Tekhnicheskom Univers.)
Moscow, 125871 (RU)**

(72) Inventors:
• **ZUEV, Jury Vladimirovich
pos. Nakhabino, Moskovskaya obl., 143430 (RU)**

• **KARPYSHEV, Alexandr Vladimirovich
Moscow, 129272 (RU)**
• **LEPESHINSKY, Igor Alexandrovich
Moscow, 125445 (RU)**

(74) Representative: **Hano, Christian, Dipl.-Ing. et al
v. Füner Ebbinghaus Finck Hano
Mariahilfplatz 2 & 3
81541 München (DE)**

(56) References cited:
EP-A- 0 388 033　　　WO-A-97/36651
WO-A-98/01231　　　FR-A1- 2 610 894
RU-A1- 94 012 947　　RU-A1- 95 106 565
US-A- 3 494 423　　　US-A- 3 604 509
US-A- 4 270 698　　　US-A- 5 520 331

## Description

### Field of the art

A group of inventions is related to fire fighting techniques and aviation engineering, namely, it concerns fire fighting aviation means applied for extinguishing the fire sites on the inaccessible territories, in multistory buildings or in cases when the supply of fire extinguishing means is required from rather a great height.

### Prior state of the art

At present are known different methods and devices to extinguish fires by way of releasing liquid from special vessels on board an aircraft, preferably airplanes.

Thus, e.g., from Patent PL 127704 a device is known designed for fire extinguishing with the help of airplanes, which houses vessels for liquid storage, two liquid drain throats, an air inlet connected with the upper part of the vessels and controlled drain valves.

Utilization of two holes for liquid drain gives and opportunity to have different liquid consumption depending on combination of valve openings. This allows, in its turn, to extinguish fire on a large territory or create long closed zones of liquid dropping around the fire site. The prior art device employs the incoming air flow for liquid expulsion from the vessels and represents itself a detachable unit, which can be fixed on board a multipurpose airplane.

A prior art method of liquid drain from an aircraft (Patent FR 2610894) is known, which includes a liquid drain through a branch pipe coming out of the airplane body in the direction opposite to the flight direction. The liquid drain in the prior art decision takes place both under force of gravity and excessive pressure of about 0.5 bar created by a pressurization system in the liquid vessel.

Another prior art method of liquid drain from an airplane (Patent CA 975733) is also known, which consists in liquid drain through a hole in the tank bottom. During the drain process there takes place the liquid atomization into drops, while it is passing through a profiled grid arranged in the outlet section of a drain hole.

The analog of a device claimed is the one of fire extinguishing with the aid of an aircraft (Patent Application RU 94012947A1). The prior art device includes liquid drain in the form of a directed jet parallel to the incoming air flow, within the range of an aircraft angle of incidence, in the direction opposite to the flight direction. At the boundary of a free jet in the direct proximity of the outlet section exit of a drain branch pipe a pressure area is produced, which is excessive in relation to air pressure overflowing the rest part of the jet and increasing with boundary distance from ht e jet axis. The air flow incoming onto the frontal surface of a liquid jet is inclined downwards, thus reducing the air flow component perpendicular to the jet. On account of this an impulse decrease imparted to a frontal jet surface and a jet deformation decrease, i.e. a directed liquid flow control, are achieved. This effect is materialized in the prior art design with the aid of special aerodynamic surfaces placed in front of the jet below a drain branch pipe or with the aid of a profiled annular wing embracing the jet.

The analog of a device claimed if the one of fire extinguishing with the aid of an aircraft (Application RU 94012947A1). The prior art device comprises a drain unit with a branch pipe of a round section directed in parallel to the aircraft body opposite to the flight direction and placed outside the aircraft. The drain unit structure also comprises an annular wing connected with the branch pipe by means of pylons. Being in the air flow a circular wing embraces a free liquid jet and creates an excessive pressure area on its boundary in relation to the air flow pressure overflowing the rest part of the jet. In its bottom the wing has an S-type profile, on account of which the air flow incoming onto the frontal surface of the jet declines downwards. It results in impulse reduction transferred to the frontal surface of the jet and, hence, its deformation. The profiled wing allows to control a directed liquid flow in this manner.

The international application WO 98/01231 describes a gas-and-droplet jet creation method and device designed for its carrying out. The method involves dispersed liquid supply in a gas flow and acceleration of a generated dual-phase gas-and-droplet flow in a gas-dynamic nozzle. For the purpose of gas-and-droplet flow supply range increase pressure P at a nozzle inlet and relative liquid concentration g in the dual-phase flow are chosen from the following conditions:

$$P \geq 2 \cdot 10^5 \text{ Pa,}$$

$$P \cdot g \leq 5{,}7 \cdot 10^8 \text{ Pa,}$$

Where $g = G_1 / G_g$ ;
$G_1$ - liquid mass flow;
$G_g$- gas mass flow.

The device for carrying out the method comprises gas and liquid supply systems, a dispersed liquid and gas mixing chamber and a gas-dynamic nozzle. A profiled nozzle channel length L is selectable depending on nozzle throat section diameter $d_{cr}$: $L \geq d_{cr}$.

From EP 0 388 033 A2 is known an atomizing nozzle which is used in fire fighting. The unit comprises a system for liquid and gas supply in a toroidal mixing chamber, wherein liquid dispersion and mixing with a gas flow are realized. The mixing chamber is connected with ambient air through cylindrical channels equally spaced from each other along the circle, through which the gas-and-droplet flow is supplied.

US 3 494 423 describes a fire fighting unit mounted onboard of a helicopter. The fire fighting unit comprises an expulsion system for extinguishing liquid supply from tanks mounted onboard of the helicopter, pipelines and a liquid atomizer mounted on a telescopic bar. Pressurized gas supplied from a compressor of a helicopter turbine engine is used as tank pressurization gas for gas drive of liquid. The liquid atomizer is made with a profiled channel in the form of a diffuser. In the process of fire fighting from aboard of a helicopter a bar extension is performed for maximum possible distance to reduce the influence of airflows descending from a helicopter rotor. A pilot controls a gas-and-droplet flow supply direction by means of atomizer azimuth movement drives and mechanisms. Herewith liquid dispersion is performed without preliminary mixing of liquid and tank pressurization gas.

A device and method of fire fighting from board of an aircraft are also known from US 4 979 571. The unit comprises tanks with fire extinguishing liquid, foam and liquefied gas. Liquid and gas supply systems are connected with extinguishing liquid and foam-forming agent mixing chamber and liquid and gas mixing chamber. The unit also comprises pipelines, a controlled monitor, mechanisms and drives of monitor movement control and an atomizing nozzle. In operation, the extinguishing liquid and foam-forming concentrate is supplied into the first mixing chamber by means of pumps, then a mixture is fed through pipelines into the second chamber, wherein pressurized gas is injected to increase foam generation efficiency. After that, the gas-rich mixture is supplied through the pipelines to the atomizing nozzle, by means of which a directed foam flow is generated. Foam flow supply direction control is executed from aboard of a helicopter by means of moving the monitor along with the nozzle in vertical direction.

The most closely analogous method to the one claimed is a method of fire extinguishing with an aircraft applied described in Patent US 3604509. The prior art method includes liquid dispersion in a gas flow, acceleration of a generated dual-phase flow in a gas-dynamics nozzle, and a directed supply of an accelerated gas-droplet stream to the fire site from the aircraft board. A foam-generating fluid is used as a liquid meant for fire extinguishing in the prior art design, which determines a mixing chamber and nozzle configuration, with the help of which a directed dropping of generated foam from an aircraft board to the fire site is reduced to practice. The choice of foam-generating fluid and gas parameters fed into the flow mixing chamber as well as that of nozzle dimensions in the prior art design depends on a desired foam ball size and the required foam consumption.

The above mentioned prior art discloses a liquid vessel designed for fire extinguishing, a mixing chamber of liquid and gas connected via a pipeline with the vessel and a gas flow supply system, a means of foam-generating fluid dispersion fed into the mixing chamber, a gas-dynamics nozzle to supply a gas-droplet stream into a fire-site, and a directed gas-droplet stream control system. In this device a foam-generating fluid is used as a working fluid and a problem of generating a foam flow with a ball size control is being solved. The foam balls generated at the nozzle exit during an operating process have a negligible initial velocity but a large external surface, which does not allow to produce a 50 m range directed dual-phase flow stable in relation to external effect factors.

The said analogs of the inventions claimed serve for extinguishing substance concentration increase with a directed supply from board an aircraft. However, these designs only partially eliminate the incoming air flow effect and do not allow to control a gas-droplet jet in a wide range of directions, neither they compensate inertia forces acting on the jet from the aircraft side. That is, the prior art analogs do not allow to completely compensate distributing factors, first and foremost, the aerodynamic forces acting on a directed flow of fire extinguishing fluid and, hence, have a limited fire extinguishing efficiency.

The main factors having an influence on fire extinguishing efficiency are: extinguishing substance consumption, a flow of which is directed to the fire site, the size and velocity of extinguishing substance drops at the fire site approach. The fire extinguishing efficiency increases with extinguishing fluid consumption and its drop velocity increase, as well as with the drop size decrease.

In prior art designs a liquid jet spray takes place at a relatively low gas-droplet jet velocity supply from board an aircraft, therefore the drop velocity approaching a fire site proves to be rather low (comparable with the rain drop speed) and the effect on a gas-droplet jet of a high-speed air flow result in its dispersion and deviation from a desired direction. The said factors mainly determine a relatively low fire extinguishing efficiency with the prior art devices and fire extinguishing methods applied with the aid of an aircraft.

## *Summary of the invention*

The inventions patented are based on the problem of increasing a fire extinguishing efficiency with an aircraft application, which is solved on account of generating a high-speed finely dispersed dual-phase flow with a high concentration of extinguishing substance, which shows stability under the effect of disturbing forces as well as the incoming air flow. The properties of a dual-phase flow are provided under certain conditions due to a desired flow structure and its longer range, i.e. in maintaining a sufficiently high speed of liquid flow drops at the distance of more than 50 m.

This technical result is achieved by the fact that in reducing to practice a method of fire extinguishing with an aircraft applied including liquid dispersion in a gas flow, acceleration of a dual-phase flow generated in a gas-dynamics nozzle and a directed supply of an accelerated gas-droplet jet into the fire site from board an aircraft, according to the invention, pressure P at the nozzle inlet and relative liquid concentration g in a dual-phase flow are chosen from the following conditions:

$$P \geq 2 \cdot 10^5 \text{ Pa}$$

$$P \cdot g \leq 5{,}7 \cdot 10^8 \text{ Pa,}$$

Where $g = G_1 / G_g$
$G_1$ - liquid mass flow;
$G_g$ - gas mass flow.

The gas-droplet jet is accelerated in the gas-dynamic nozzle having a profiled nozzle channel length L chosen from the condition:

$$L > 2d_{exit},$$

where $d_{exit}$ is a diameter of an exit section of the gas-dynamic nozzle, which is chosen depending on a possible aircraft flight altitude H from the condition:

$$d_{exit} \geq 0{,}04 \text{ H/g.}$$

A full or partial compensation of disturbing forces acting on the gas-droplet jet freely flowing from aboard an aircraft is carried out by changing a jet velocity vector in relation to an aircraft motion velocity vector, and controlling the gas-droplet jet by a nozzle rotation andlor pressure control and/or liquid and/or gas mass flow control at the nozzle inlet.

It is also preferable to fully or partially compensate the disturbing forces acting on a freely flowing gas-droplet stream from board an aircraft by changing a jet velocity vector in relation to an aircraft movement velocity vector.

For effective fire fighting it is desirable to control a gas-droplet jet by rotating a nozzle and/or pressure control and/or liquid consumption and/or gas consumption at the nozzle inlet.

To achieve the most complete compensation of disturbing forces the velocity inclination angle **W** of gas-droplet stream in relation to an aircraft velocity **V** is chosen from minimization condition of a total jet impulse along its flight trajectory in the direction of disturbing force effects.

In the simplest case, when you can neglect an aerodynamic force value acting on a gas-droplet jet, the indication angle $\alpha$ of the gas-droplet stream velocity **W** in relation to the aircraft velocity **V** is chosen such as the vector projection **W** to vector direction **V** be directed in the opposite direction in relation to vector **V** and the condition performed: **cos** $\alpha$ = -|**V**| / |**W**|-.

To make a gas-droplet jet compact, i.e. for compensation and reduction of a transverse size of a dual-phase flow, it is preferable to use an annular gas-dynamics nozzle.

A gas flow can be generated with the help of at least one compressor or turbocompressor unit.

For this purpose a turbocompressor unit can be used, which is a part of turbojet engine on board an aircraft.

It is possible to use gas behind the turbojet engine turbine.

To generate a gas flow the working fluid of a cold gas flow of a by-pass turbojet engine can be employed.

Water can be used as liquid meant for fire extinguishing.

An airplane or a helicopter can be preferable as an aircraft.

## Brief description of the drawings

The inventions hereinafter will be described with reference to a specific embodiment illustrated in the accompanying drawings, wherein:

Fig. 1 is a functional schematic view of a fire extinguishing device according to the invention;
Fig.2 is a device arrangement view on board an aircraft;
Fig.3 is a schematic view of mixing chamber and a gas-dynamics nozzle;
Fig.4 is a schematic view of mixing chamber and an annular gas-dynamics nozzle;
Fig.5 is a schematic view of a device with air supply from the turbojet engine (TJE);
Fig.6 is a schematic view of TJE combustion product gas supply system;
Fig.7 is a schematic view of a device with air supply from an additional compressor.

## Preferred embodiments of the invention

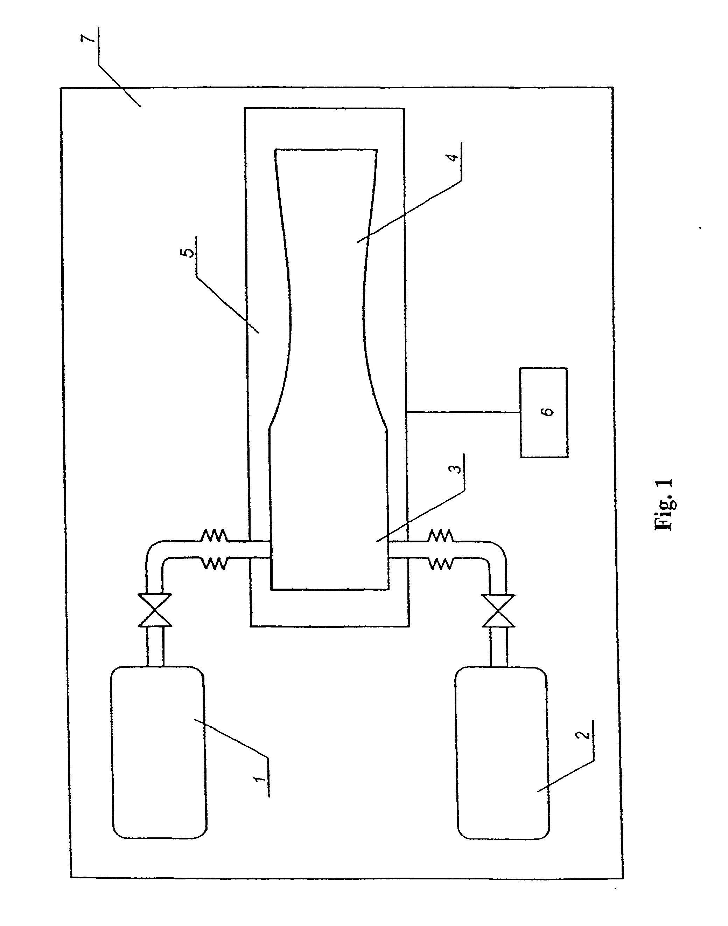

A fire extinguishing method can be effected with the help of a device, a functional schematic view of which is illustrated in Fig. 1.

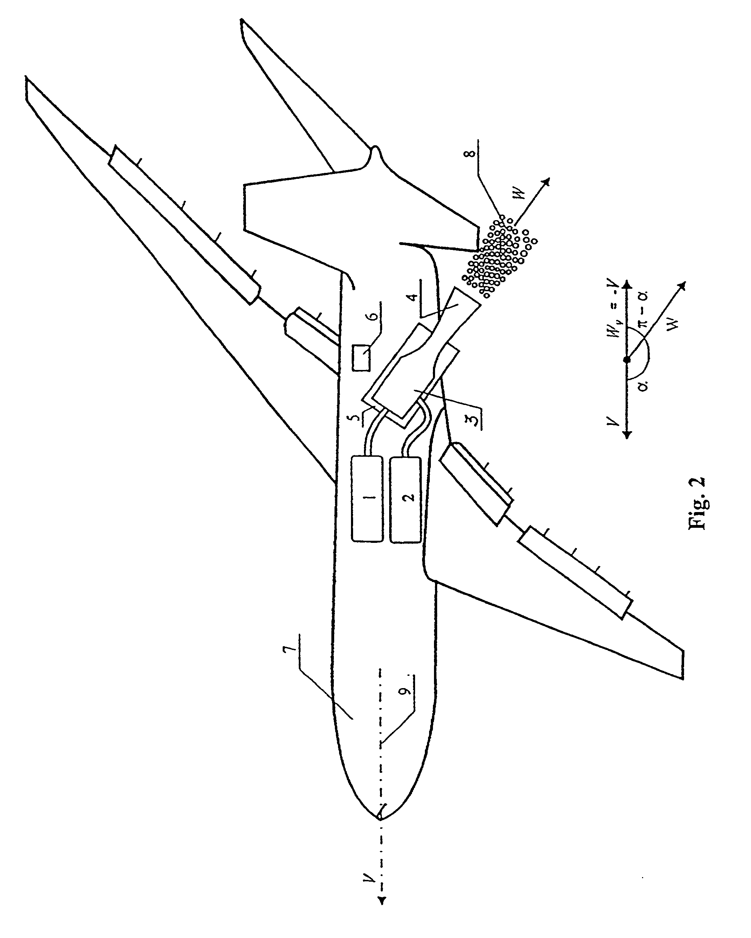

A fire extinguishing device comprises a liquid supply system 1 meant for fire extinguishing, a gas supply system 2, a liquid and gas mixing chamber 3, a gas-dynamics nozzle 4, a controllable platform 5 with a displacement mechanism, on which a nozzle 4 with a chamber 3 are installed, a control system 6, which are placed on board an aircraft, e.g. airplane 7, in its aft part (see Fig.2).

The nozzle 4 with the help of a moving platform 5 is oriented in the desired direction. For complete compensation of disturbing aerodynamic forces the inclination angle of gas-droplet jet 8 velocity vector **W** with respect to the aircraft movement velocity vector **V** is chosen from the condition of total jet impulse value minimization along its flight trajectory in the direction of disturbing force effects. In the case considered the velocity vector **V** coincides with the axis of symmetry 9 of the airplane 7 hull structure (see Fig.2).

If in field conditions of device a value of aerodynamic forces acting on a gas-droplet jet can be neglected, the inclination angle a of gas-droplet stream velocity **W** in relation to the aircraft velocity **V** is chosen so that vector **W** projection to vector **V** direction be directed in the opposite direction to vector **V** and the following condition performed: **cos** $\alpha$ = - |**V**| / |**W**|-.

In performing these conditions a gas-droplet jet 8 will be directed vertically downwards with respect to the surface of the Earth, if the angle between the vectors **V** and W is also in the vertical plane or at a small angle to the vertical plane passing through the aircraft axis 9. The latter mode can be used, in case if it is necessary, for any reason, to direct a jet of extinguishing substance at a certain angle to a vertical plane.

As a source of gas, e.g. air, either a gas cylinder system or a turbocompressor unit as a part of a standard turbojet engine, e.g. TB7-117, can be used. This unit can provide gas consumption $m_r$ = 8,5 kg/s under pressure up to $4 \cdot 10^5$ Pa, which determines mixing chamber pressure. The liquid meant for fire extinguishing, water in the said example, is placed in special tanks and supplied to the mixing chamber with the help of expulsion or pump supply system.

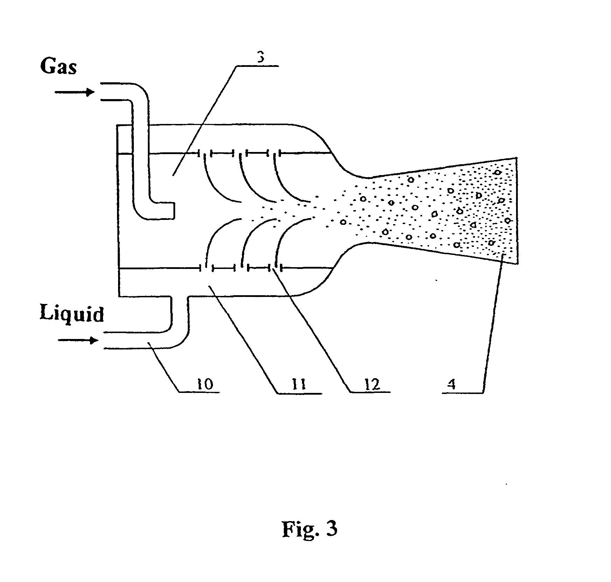

The mixing chamber outlet 3 is connected with the nozzle inlet 4 (see Fig.3) and its inlet — with the gas supply system via a branch pipe 10 and the liquid supply system via a cavity 11 and directly through holes 12 made in the division wall. In this case a performed division wall of the mixing chamber serves as a means of liquid dispersion.

The parameters of the air flow fed into the mixing chamber and the size of the holes 12 are chosen on account of a desired size of liquid drops supplied from the cavity 11 to the mixing chamber 3 in the form of thin jets. It should be noted that other methods of liquid supply to the chamber 3 are possible, e.g. with the help of injectors, as it is done in the similar way in liquid propellant engines. For liquid supply to the mixing chamber 3 an expulsion supply system and be used with the air pumped by a turbocompressor unit or a pump actuated by a turbocompressor aggregate or an electric motor.

Thus obtained a gas-and-drop flow is fed to the nozzle 4 where it is accelerated up to desired velocity. At the nozzle 4 exit a directed gas-droplet jet is produced, which is oriented in a required direction with the help of a control system 6 with respect to the aircraft velocity **V**.

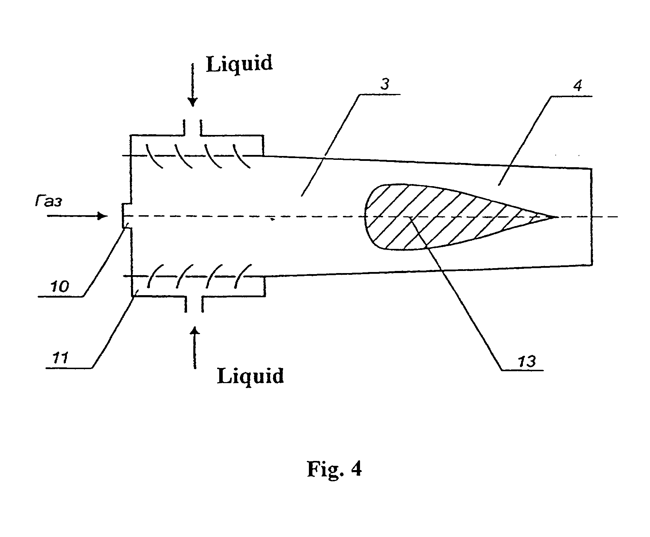

Another preferred embodiment of the invention employs an annular gas-dynamics nozzle 4 with a central body (see Fig.4). This nozzle embodiment allows to compact (compress) a gas-droplet jet with relatively uniform water drop distribution along the jet section and, on this account, increase the fire extinguishing liquid concentration in a two-phase jet directed to the fire site.

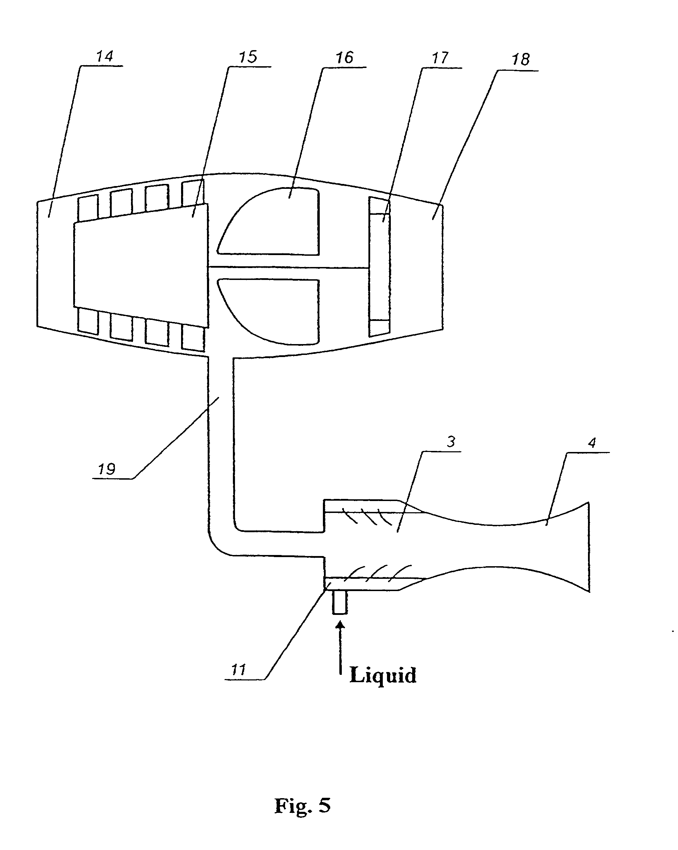

One of the preferred invention embodiments employs a turbojet engine as a source of gas (see Fig. 5-7), which comprises a diffuser 14, a compressor 15, a combustion chamber 16, a turbine 17 and a nozzle 18. The air flow is supplied from the compressor outlet 15 (see Fig.5) and through a gas supply pipeline 19 passes into the mixing chamber 3, the dispersed liquid from cavity 11 passing there as well. A dual-phase flow obtained passes in the same way to the nozzle 4, where its acceleration takes place.

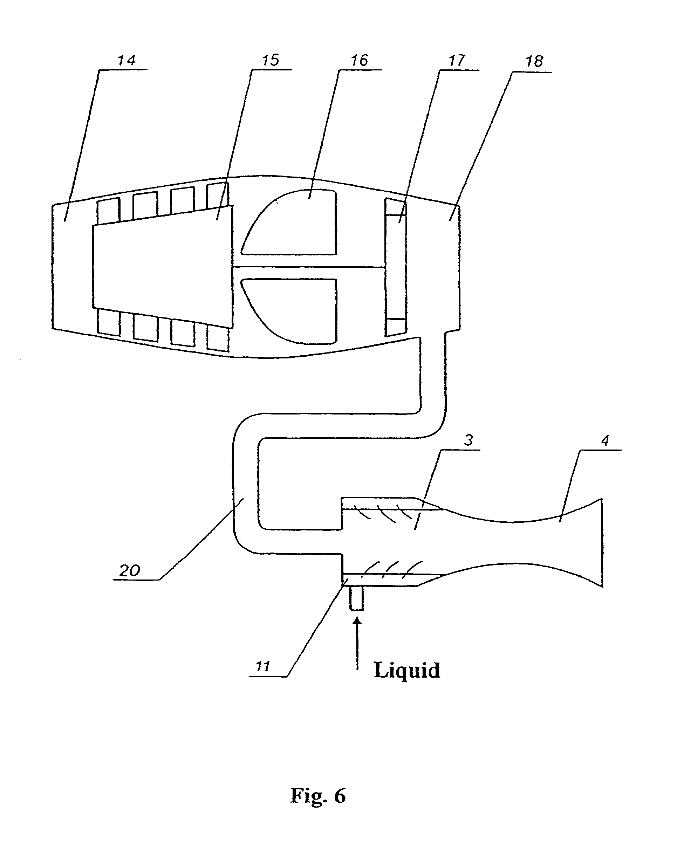

In another preferred invention embodiment the working gas may be fed into the mixing chamber 3 from the turbine outlet 7 through the pipeline 20 (see Fig.6). A by-pass TJE can also be employed with working gas taken either from one or two engine gas flows simultaneously.

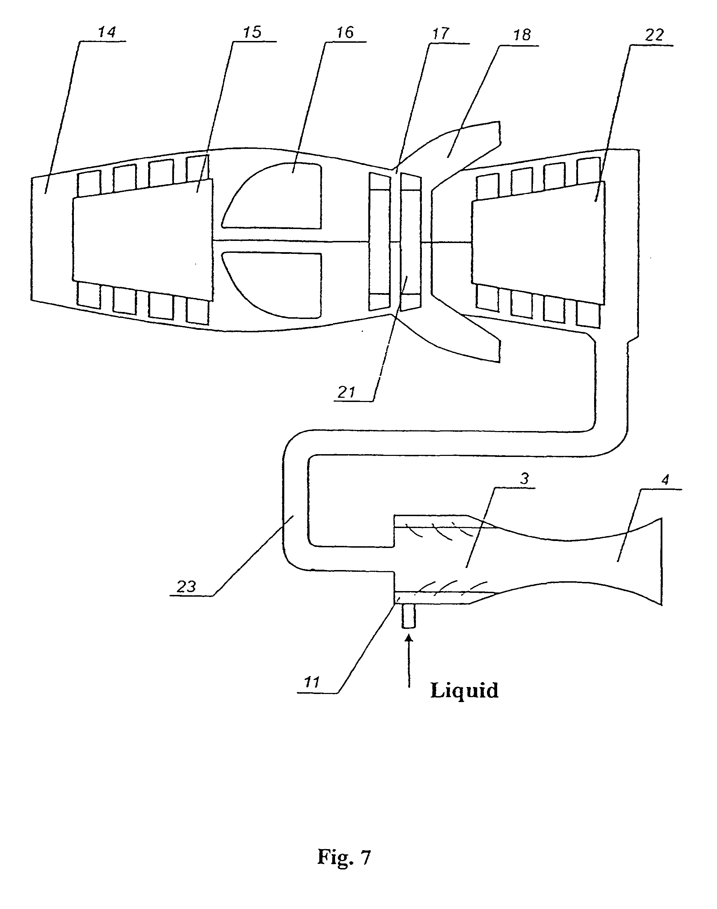

Another invention embodiment (see Fig.7) employs a special gas turbine unit including a compressor 15, a combustion chamber 16, a turbine 17 for compressor 15 drive, a nozzle 18, a free turbine 21, which drives a compressor 22, which serves to obtain a working gas flow. The air, perhaps together with combustion products, passes from the compressor through the gas pipeline 23 into the mixing chamber 3, where it is mixed with a dispersed liquid. Then dual-phase flow obtained is accelerated in the nozzle 4.

A fire extinguishing method with an aircraft application is effected with the help of the above-mentioned device in the following manner.

A gas flow, in which the dispersed liquid drops are distributed through orifices 12 of cavity 11, is supplied to the mixing chamber 3 (see Fig.3) through a branch pipe 10. A dual-phase flow produced as a result of liquid and gas mixing is accelerated in the gas-dynamics nozzle 4. The direction of the nozzle 4 and, respectively, velocity vector **W** of a gas-droplet jet 8 are chosen so as to provide distribution of a dual-phase flow in the fire site direction in a vertical plane during the aircraft flight.

The nozzle 4 inlet pressure **P** and a relative liquid concentration g in the dual-phase flow are chosen from the following conditions:

$$P \geq 2 \cdot 10^5 \text{ Pa}$$

$$P \cdot g \leq 5,7 \cdot 10^8 \text{ Pa,}$$

Where $g = G_1 / G_g$ ;
$G_1$ - liquid mass flow;
$G_g$ - gas mass flow.

Maximum gas pressure values $P_{max}$ and relative liquid concentration $g_{max}$ are chosen from the condition of highly dense compactness of liquid particles in a gas flow, when a dispersed liquid structure formation is possible in the dual-phase flow. This condition is characterized by a formula:

$$P_{max} = \pi R T r_1 / (1-\pi/6)g_{max} \,,$$

where $\pi$ = 3,1416;

$R$ - gas constant of a dual-phase flow gas phase (for our R=287 J/kg ·K);

$T$ - gas temperature in the nozzle outlet dual-phase flow (for the conditions considered T=300 K);

$r_1$ - liquid density in the dual-phase flow (for water $r_1$ = 1000 kg/m$^3$).

Taking into account real marginally acceptable possibilities of reducing to practice fire extinguishing method patented, this condition can be written in the following form: $P_{max} \cdot g_{max}$ = 5,7 · 10$^8$ Pa. It is seen from the condition that to reduce the invention to practice the pressure and mass flow values have to be chosen due to $P \cdot g \le 5{,}7 \cdot 10^8$ Pa. The low level of gas pressure at the nozzle 4 inlet is chosen from real condition of a dual-phase flow generation, the exhaust velocity of which is sufficient for effective fire extinguishing from an assigned aircraft flight altitude ($H \ge 50$ m): $P \ge 2 \cdot 10^5$ Pa.

The choice of necessary parameters in accordance with the conditions indicated provides solution of a technical problem put forward on account of jet stability and considerable jet velocity which entering the fire site zone. A required liquid dispersion (size of the drops) is provided in the course of dual-phase flow formation in the mixing chamber 3 and its acceleration in the nozzle 4.

In the example considered the liquid flow is chosen equal $G_1$=100 kg/s, gas flow - $G_g$=8,5 kg/s with pressure $P$ up to 4·10$^5$ Pa. With the flow and pressure values chosen the exhaust velocity of the jet is $W$=130 m/s.

A gas-droplet stream control is effected by a nozzle rotation with the help of moving platform 5, pressure and liquid flow and gas pressure control at the nozzle 4 inlet.

The choice of jet velocity vector inclination angle with respect to aircraft motion velocity vector fully or partially compensates the disturbing forces acting on a gas-droplet stream freely draining from board an aircraft (see Fig.2).

To achieve the most complete compensation of disturbing aerodynamic forces the inclination angle $\alpha$ of gas-droplet stream vector $W$ with respect to aircraft velocity vector V is chosen from minimization of total jet impulse value along its flight trajectory in the direction of disturbing force effects. For the invention embodiment considered (see Fig.2) the gas-droplet stream velocity vector W inclination angle $\alpha$ with respect to the aircraft velocity vector $V$ is chosen so that vector $W$ projection upon vector $V$ direction is directed opposite with respect to vector $V$ and the following condition fulfilled: $\cos \alpha = - |V| / |W|$-.

In real conditions of carrying out the invention - when an aircraft flies in the proximity of a fire site with the speed of 80 m/s (290 km/hr) at the altitude of 50 m and at the chosen angle of speed vector inclination $\alpha$ = 130° - the velocity of a gas-droplet jet at the fire site surface is more than 50 m/s. Under these conditions the size of liquid drops in the gas-droplet jet will be less than 100 μm. With these parameters, as the investigations showed, a high efficiency of fire extinguishing is ensured.

Since the speed of a gas-droplet jet is inversely proportional to liquid concentration and its range is directly proportional to liquid concentration, it is preferable to employ a jet compactness, the ability to increase gas pressure at the nozzle inlet limited. This is carried out on account of liquid drop acceleration with low liquid concentration and the following formation of a high-speed gas-droplet jet of a high concentration at the nozzle exit. These conditions are provided by using a profiled annular nozzle 4 in the respective manner (see Fig. 4).

To provide a required range of a gas-droplet jet at the different altitudes of an aircraft flight determined by an aircraft type (airplane or helicopter) the nozzle 4 exit section diameter $d_{exit}$ is chosen depending on possible flight altitude in the proximity of a fire site according to the condition:

condition: $d_{exit} \ge$ **0,04 H/g** , where **H -** aircraft flight altitude.

Acceleration of a two-phase gas-and-drop flow up to a desired fire extinguishing velocity $W$ of a jet exhaust is achieved by employing the nozzle 4 with a profiled channel length $L$ chosen from condition: $L > 2\,d_{exit}$.

The calculations performed have shown that at the choice of required parameters in accordance with the above mentioned conditions it is possible to extinguish a fire at an aircraft flight velocity within the range of 0 to 400 km/hr and flight altitude up to 200 m (optimum values are indicated, though a higher speed and a higher altitude are possible). It should be noted that aircraft-tankers used nowadays for fire extinguishing operate with the flight speed up to 300 km/hr and altitudes up to 100 m.

A gas flow supplied to a mixing chamber 3 is generated with the help of a turbocompressor unit (see Figs. 5 - 7). To create an air flow a few turbocompressor units may be employed.

To reduce the weight and simplify the device structure a turbocompressor unit is used, which is a part of a turbojet engine (TJE) powering an airplane or helicopter.

In one of the method embodiments a gas flow is supplied to the mixing chamber 3 from the compressor exit 15 driven by a turbine 17 (see Fig.5). A dual-phase flow obtained in the mixing chamber 33 as a result of mixing with dispersed liquid passes into the nozzle 4, where it is accelerated.

In another method embodiment the working gas is supplied to the mixing chamber 3 from turbine exit 17 through the pipe 20 (see Fig.6). For this purpose a bypass TJE can also be used with working gas take-off from a single or two engine passages simultaneously.

In another method embodiment (see Fig.7) a special gas-turbine unit is used comprising a free turbine 21, which drives a compressor 22 to obtain the working gas flow. The air, perhaps together with the combustion products, is supplied from the compressor through the gas pipe 23 to the mixing chamber 3, where it is mixed with a dispersed liquid. The dual-phase flow is then accelerated in the nozzle 4.

It should be noted that to generate a gas flow supplied to the mixing chamber 3 both a compressor as a part of the aircraft TJE and a compressor specially designed for fire extinguishing system operation and ensuring gas supply under a desired pressure to the chamber 3 can be employed.

Thus the method allows to increase the fire extinguishing efficiency on account of generating a high-speed two-phase jet with a drop dispersion and extinguishing liquid concentration required for effective fire extinguishing. Maintaining two-phase jet parameters while approaching the fire site takes place on account of a certain structure of an accelerated flow and the required speed of liquid drops provided by the choice of parameters in accordance with the said conditions, which finally determines the jet range.

To achieve an object of the invention the following is provided:

a) Maintaining a gas-droplet stream compactness along its whole trajectory of its motion from the nozzle exit section to the fire site;
b) A certain range of drop size in the jet - 20 $\mu$m to 200 $\mu$m;
c) Speed excess of drop in the jet while approaching the fire site over the free fall seed of the drops (the speed of a gas-droplet jet a the fire site is in the range 1 m/s to 100 m/s).

*Industrial application*

A method designed for fire extinguishing with an aircraft can be used in different fields of activity, where the facilities of fire extinguishing have to be placed on board an aircraft or helicopter, e.g. in agriculture or forestry to extinguish fires on a large territory.

The most effective utilization of inventions is in extinguishing hardly accessible fire sites, where the most effective extinguishing liquid flow rate is required. The inventions can also be successfully applied for extinguishing fires of a higher burn intensity, e.g. at oil flood, oil well firing, etc.

It is preferred to employ the inventions in developing aircraft technology as a system integral in the aircraft arrangement, as well as a detachable unit placed on board a multipurpose aircraft, when it is necessary.

Though a group of inventions patented has been described in connection with a preferred embodiment only, the specialists in this field of technology realize that alterations and other embodiments can take place without deviation from the subject matter as defined in the appended claims.

**Claims**

1. A method of fire extinguishing with application of an aircraft (7) comprising liquid dispersion in a gas flow, acceleration of a generated dual-phase flow in a gas-dynamic nozzle (4) and a directed supply of an accelerated gas-droplet jet (8) to a fire site from aboard an aircraft (7), wherein pressure P at a nozzle inlet and relative liquid concentration g in the dual-phase flow are chosen from the following conditions:

$$P \geq 2 \cdot 10^5 \text{ Pa}$$

$$P \cdot g \leq 5{,}7 \cdot 10^8 \text{ Pa,}$$

Where $g = G_1 / G_g$ ;
$G_1$ - liquid mass flow;
Gg - gas mass flow,
**characterized in that** the gas-droplet jet is accelerated in the gas-dynamic nozzle (4) having a profiled nozzle channel length L chosen from the condition:

$$L > 2d_{exit},$$

where $d_{exit}$ is a diameter of an exit section of the gas-dynamic nozzle (4), which is chosen depending on a possible aircraft flight altitude H from the condition:

$$d_{exit} \geq 0{,}04 \text{ H/g,}$$

and a full or partial compensation of disturbing forces acting on the gas-droplet jet (8) freely flowing from aboard an aircraft (7) is carried out by changing a jet velocity vector in relation to an aircraft motion velocity vector, and controlling the gas-droplet jet (8) by a nozzle rotation and/or pressure control and/or liquid and/or gas mass flow control at the nozzle inlet.

2. The method of claim 1, **characterized in that** the flight altitude is chosen from the condition: H $\leq$ 200 m.

3. The method of claim 1, **characterized in that** the inclination angle $\alpha$ of a gas-droplet jet velocity vector W with respect to an aircraft motion velocity vector V is chosen such that the vector projection W to the vector direction V is directed opposite in relation to the vector V and fulfilling the condition: $\cos \alpha = -|\mathbf{V}| / |\mathbf{W}|$.

4. The method of claim 1, **characterized in that** the gas-dynamic nozzle (4) is an annular gas-dynamic nozzle.

5. The method of claim 1, **characterized in that** a gas flow is generated with the help of at least one compressor or turbo-compressor unit.

6. The method of claim 1, **characterized in that** a gas flow is generated with the help of at least a single turbo-compressor unit, which is a part of the aircraft turbojet engine.

7. The method of claim 1, **characterized in that** turbine exhaust gas is used.

8. The method of claim 1, **characterized in that** for gas flow generation the working medium of the second passage of a by-pass turbojet engine is used.

9. The method of claim 1, **characterized in that** water is used as liquid.

10. The method of claim 1, **characterized in that** an airplane or a helicopter is used as an aircraft.


**Patentansprüche**

1. Verfahren zum Feuerlöschen unter Einsatz eines Luftfahrzeugs (7), bei welchem eine Flüssigkeit in einem Gasstrom dispergiert wird, ein erzeugter zweiphasiger Strom in einer gasdynamischen Düse (4) beschleunigt wird, und ein beschleunigter Gas-Tröpfchen-Strahl (8) von Bord des Luftfahrzeugs (7) direkt auf einen Brandherd gerichtet wird, wobei der Druck P an einem Einlass der Düse und die relative Flüssigkeitskonzentration g in dem zweiphasigen Strom aus den folgenden Bedingungen ausgewählt werden:

$$P \geq 2 \cdot 10^5 \text{ Pa}$$

$$P \cdot g \leq 5,7 \cdot 10^8 \text{ Pa,}$$

wo $g = G_1 / G_g$;
$G_1$ - Flüssigkeitsmassenstrom;
$G_g$ - Gasmassenstrom,
**dadurch gekennzeichnet, dass** der Gas-Tröpfchen-Strahl in der gasdynamischen Düse (4) beschleunigt wird, die einen profilierten Düsenkanal aufweist, dessen Länge L aus der Bedingung gewählt wird:

$$L > 2 \, d_{exit},$$

wobei $d_{exit}$ ein Durchmesser eines Austrittsquerschnitts der gasdynamischen Düse (4) ist, der abhängig von einer möglichen Flughöhe H des Luftfahrzeugs aus der Bedingung gewählt wird:

$$d_{exit} \geq 0,04 \text{ H/g,}$$

und eine vollständige oder teilweise Kompensation der auf den von Bord des Luftfahrzeugs (7) frei strömenden Gas-Tröpfchen-Strahl (8) einwirkenden störenden Kräfte durchgeführt wird, indem ein Strahlgeschwindigkeitsvektor in Relation zu einem Bewegungsgeschwindigkeitsvektor des Luftfahrzeugs geändert wird, und der Gas-Tröpfchen-Strahl (8) durch Steuerung der Rotation der Düse und/oder des Drucks und/oder Steuerung des Flüssigkeits- und/oder Gasmassenstroms am Einlass der Düse gesteuert wird.

2. Verfahren nach Anspruch 1, **dadurch gekennzeichnet, dass** die Flughöhe aus der Bedingung gewählt wird: $H \leq 200m$.

3. Verfahren nach Anspruch 1, **dadurch gekennzeichnet, dass** der Neigungswinkel $\alpha$ des Gas-Tröpfchen-Strahl-Geschwindigkeitsvektors W bezüglich des Bewegungsgeschwindigkeitsvektors V des Luftfahrzeugs derart gewählt wird, dass die Projektion des Vektors W auf die Richtung des Vektors V in Relation zum Vektor V gegengerichtet ist und die Bedingung erfüllt wird: $\cos \alpha = - |V| / |W|$.

4. Verfahren nach Anspruch 1, **dadurch gekennzeichnet, dass** die gasdynamische Düse (4) eine ringförmige gasdynamische Düse ist.

5. Verfahren nach Anspruch 1, **dadurch gekennzeichnet, dass** der Gasstrom mit Hilfe wenigstens eines Kompressors oder einer Turbokompressoreinheit erzeugt wird.

6. Verfahren nach Anspruch 1, **dadurch gekennzeichnet, dass** der Gasstrom mit Hilfe wenigstens einer Turbokompressoreinheit, die Teil des Strahlturbinentriebwerks des Luftfahrzeugs ist, erzeugt wird.

7. Verfahren nach Anspruch 1, **dadurch gekennzeichnet, dass** Abgas einer Turbine verwendet wird.

8. Verfahren nach Anspruch 1, **dadurch gekennzeichnet, dass** zur Erzeugung des Gasstroms das Arbeitsmedium des zweiten Durchgangs eines Bypass-Strahlturbinentriebwerks verwendet wird.

9. Verfahren nach Anspruch 1, **dadurch gekennzeichnet, dass** als Flüssigkeit Wasser verwendet wird.

10. Verfahren nach Anspruch 1, **dadurch gekennzeichnet, dass** als Luftfahrzeug ein Flugzeug oder ein Hubschrauber verwendet wird.

**Revendications**

1. Procédé d'extinction d'incendie au moyen d'un aéronef (7) comprenant une dispersion liquide dans un écoulement gazeux, une accélération d'un écoulement biphasé généré dans une tuyère à dynamique gazeuse (4) et une alimentation dirigée d'un jet accéléré de gouttelettes et de gaz (8) vers un lieu d'incendie depuis un aéronef (7), dans lequel une pression P au niveau d'une entrée de tuyère et une concentration liquide relative g dans l'écoulement biphasé sont choisies à partir des conditions suivantes :

$$P \geq 2 \cdot 10^5 \text{ Pa}$$

$$P \cdot g \leq 5,7 \cdot 10^8 \text{ Pa,}$$

où $g = G_1 / G_g$ ;
$G_1$ - débit massique du liquide;
$G_g$ - débit massique du gaz,
**caractérisé en ce que** le jet de gouttelettes et de gaz est accéléré dans la tuyère à dynamique gazeuse (4) présentant une longueur de canal de tuyère profilée L choisie à partir de la condition :

$$L > 2d_{sortie},$$

où $d_{sortie}$ est un diamètre d'une section de sortie de la tuyère à dynamique gazeuse (4), qui est choisi en fonction d'une altitude possible de vol de l'aéronef H à partir de la condition :

$$d_{sortie} \geq 0,04 \text{ H/g,}$$

et une compensation totale ou partielle des forces perturbatrices agissant sur le jet de gouttelettes et de gaz (8) s'écoulant librement depuis un aéronef (7) est réalisée en modifiant un vecteur de vitesse de jet par rapport à un vecteur de vitesse de déplacement de l'aéronef et en commandant le jet de gouttelettes et de gaz (8) au moyen d'une commande de rotation et/ou de pression de tuyère et/ou d'une commande de débit massique de liquide et/ou de gaz au niveau de la sortie de tuyère.

2. Procédé selon la revendication 1, **caractérisé en ce que** l'altitude de vol est choisie à partir de la condition : $H \leq 200$ m.

3. Procédé selon la revendication 1, **caractérisé en ce que** l'angle d'inclinaison $\alpha$ d'un vecteur de vitesse de jet de gouttelettes et de gaz W par rapport à un vecteur de vitesse de déplacement de l'aéronef V est choisi de telle sorte que la projection de vecteur W vers la direction de vecteur V est dirigée à l'opposé par rapport au vecteur V et remplissant la condition : $\cos \alpha = - |V| / |W|$.

4. Procédé selon la revendication 1, **caractérisé en ce que** la tuyère à dynamique gazeuse (4) est une tuyère à dynamique gazeuse annulaire.

5. Procédé selon la revendication 1, **caractérisé en ce qu'**un écoulement gazeux est généré à l'aide d'au moins un compresseur ou groupe turbo-compresseur.

6. Procédé selon la revendication 1, **caractérisé en ce qu'**un écoulement gazeux est généré à l'aide d'au moins un groupe turbo-compresseur unique, qui fait partie du turboréacteur de l'aéronef.

7. Procédé selon la revendication 1, **caractérisé en ce que** du gaz d'échappement de turbine est utilisé.

8. Procédé selon la revendication 1, **caractérisé en ce que** pour générer l'écoulement gazeux, le fluide de travail du deuxième passage d'un turboréacteur à double flux est utilisé.

9. Procédé selon la revendication 1, **caractérisé en ce que** de l'eau est utilisée en tant que liquide.

10. Procédé selon la revendication 1, **caractérisé en ce qu'**un avion ou un hélicoptère est utilisé en tant qu'aéronef.

Fig. 1

Fig. 2

**Gas**

**Liquid**

3

10 11 12 4

Fig. 3

Fig. 4

**Fig. 5**

**Fig. 6**

**Fig. 7**